# EUROPÄISCHE PATENTSCHRIFT

(11) **EP 1 261 057 B1**
(45) Veröffentlichungstag und Bekanntmachung des Hinweises auf die Patenterteilung: **19.01.2005**
(21) Anmeldenummer: 01112426.0
(22) Anmeldetag: 22.05.2001
(51) Int. Cl.: H01M 8/10, H01M 4/88, C25B 9/00

(54) **Verfahren zur Herstellung einer Membran-Elektrodeneinheit und dadurch hergestellte Membran-Elektrodeneinheit**
Production process of a membrane-electrode assembly and membrane-electrode assembly obtained by this process
Procédé de fabrication d'une unité membrane-électrode et unité membrane-élecrote obtenue par ce procédé

(43) Veröffentlichungstag der Anmeldung: 27.11.2002
(73) Patentinhaber: Umicore AG & Co. KG, 63457 Hanau-Wolfgang (DE)
(72) Erfinder: KÖHLER, Joachim, Dr., 63584 Gründau / HG (DE); STARZ, Karl-Anton, Dr., 63517 Rodenbach (DE); BAYER, Armin, 63579 Freigericht (DE); KRÄMER, Anita, 63543 Neuberg (DE); FEHL, Knut, 36381 Schlüchtern (DE)
(74) Vertreter: Weinberger, Rudolf, Dr.

(56) Entgegenhaltungen:
- EP-A- 0 928 036
- CA-C- 2 052 221
- US-A- 5 395 705
- US-A- 5 992 008
- US-A- 5 998 057
- US-B1- 6 183 898
- US-B1- 6 218 035

## Beschreibung

Die vorliegende Erfindung betrifft ein Verfahren zur Herstellung einer Membran-Elektrodeneinheit für Brennstoffzellen.

Eine Membran-Elektrodeneinheit dient zur Erzeugung von elektrischer Energie durch räumlich getrennte Oxidation eines Brennstoffs, gewöhnlich Wasserstoff, und Reduktion von Sauerstoff. Die Oxidation des Wasserstoffes erfolgt an der Anode unter Einwirkung eines Anodenkatalysators. Die hierbei freigesetzten Elektronen fließen über einen äußeren Stromkreis zur Kathode, während die gebildeten Protonen durch die Membran wandern und am Kathodenkatalysator mit Sauerstoff zu Wasser reagieren.

Eine Membran-Elektrodeneinheit besteht aus einer protonenleitenden Polymerelektrolyt-Membran, welche auf den beiden gegenüberliegenden Flächen mit jeweils einer Katalysatorschicht beschichtet ist. Zur elektrischen Kontaktierung der Katalysatorschichten und zur Zu- und Abführung von Brennstoff, Sauerstoff und Wasser werden auf die Katalysatorschichten sogenannte Gasverteilerschichten gelegt, die aus porösen, elektrisch leitfähigen, hydrophobierten Kohlenstoffsubstraten und einer sogenannten Kontaktschicht bestehen. Die Porosität der Kohlenstoffsubstrate liegt im Bereich zwischen 50 und 95 %. Ihr mittlerer Porendurchmesser beträgt 30 bis 50 µm und ihre Dicke liegt zwischen 100 und 400 µm.

Die Kontaktschichten der Gasverteilerschichten dienen zur Verbesserung des Kontaktes zwischen den Katalysatorschichten und den porösen Kohlenstoffsubstraten. Die Kontaktschichten bestehen gewöhnlich aus einer Mischung aus einem leitfähigen Ruß und einem hydrophoben Polymer, wie zum Beispiel Polytetrafluorethylen (PTFE) und weisen eine geringere Porosität als die Gasverteilerschichten auf. Sie werden häufig auch als "Microlayer" bezeichnet, da ihr mittlerer Porendurchmesser kleiner als 1 µm ist.

Die protonenleitenden Materialien der Polymerelektrolyt-Membran werden im folgenden auch kurz als Ionomere bezeichnet. Bevorzugt wird ein Tetrafluorethylen-Fluorvinylether-Copolymer mit Säurefunktionen, insbesondere Sulfonsäuregruppen, verwendet. Ein solches Material wird zum Beispiel unter dem Handelsnamen Nafion® von E.I. DuPont vertrieben. Es sind jedoch auch andere, insbesondere fluorfreie Ionomermaterialien, wie sulfonierte Polyetherketone oder Arylketone oder Polybenzimidazole einsetzbar. Die Polymerelektrolyt-Membranen haben in der Regel eine Dicke zwischen 30 und 100 µm.

Die Katalysatorschichten von Anode und Kathode auf den gegenüberliegenden Flächen der Polymerelektrolyt-Membran enthalten einen geeigneten Katalysator, welcher in einer porösen Schicht aus einem ionenleitenden Polymer und gegebenenfalls einem Binder dispergiert ist, wobei das ionenleitende Polymer gewöhnlich dasselbe ist, aus welchem auch die Membran gefertigt ist. Als Binder wird häufig ein Fluorpolymer wie zum Beispiel PTFE eingesetzt. Die poröse Struktur der Elektrodenschichten gewährleistet einen optimalen Drei-Phasen-Kontakt zwischen dem ionenleitenden Ionomer, dem Katalysator und den gasförmigen Reaktanden. Dadurch wird ein leichter Austausch von Protonen zwischen der Polymerelektrolyt-Membran und den aktiven Zentren des Katalysators möglich und führt zu guten elektrochemischen Leistungsdaten der Brennstoffzelle.

Als Katalysator eignen sich Edelmetallmohre, das heißt feinteilige Partikel aus Platin oder seinen Legierungen, oder Trägerkatalysatoren aus feinteiligen Kohlenstoffpartikeln, wie zum Beispiel Ruß, auf denen der Katalysator in hoher Dispersion abgeschieden ist. Die Kohlenstoffsubstrate der Gasverteilerschichten bestehen zumeist aus einem porösem Kohlefasergewebe, Kohlefaservlies oder Kohlefaserpapier. Die Kohlenstoffsubstrate werden durch Imprägnieren mit einer Dispersion eines hydrophoben Materials hydrophobiert, um eine Kondensation von Wasserdampf in den Poren der Substrate zu vermeiden. Zum Imprägnieren wird häufig eine PTFE-Dispersion verwendet. Nach dem Imprägnieren werden die Kohlenstoffsubstrate über den Schmelzpunkt des PTFE erhitzt (ca. 340 bis 390 °C). Zweck der Kohlenstoffsubstrate oder Gasverteilerschichten ist es, die gasförmigen Reaktanden an die Katalysatorschichten heranzuführen, sowie an der Kathode sich bildendes Wasser abzuführen.

Es sind verschiedene Verfahren zur Herstellung von Membran-Elektrodeneinheiten der oben beschriebenen Art bekannt geworden. Gemäß Protocol I aus der US 5,211,984 kann ein sogenanntes Decal-Verfahren zur Beschichtung der Polymerelektrolyt-Membran mit den Katalysatorschichten eingesetzt werden. Hierbei wird zunächst eine Stützfolie mit einer Katalysatortinte beschichtet, die einen Platin-Trägerkatalysator und gelöstes Ionomer enthält. Die Katalysatorschicht auf der Stützfolie wird im Ofen bei 135 °C getrocknet und anschließend bei 145 °C und einem Druck zwischen 70 und 90 bar auf eine Polymerelektrolyt-Membran gepreßt. Anschließend wird die Stützfolie abgezogen. Alternativ hierzu kann die Polymerelektrolyt-Membran gemäß Protocol II der obigen US-Patentschrift auch direkt mit den Katalysatortinten beschichtet werden. Die Beschichtung erfolgt in diesem Fall auf die auf 160 °C erhitzte Membran und führt zu einer Katalysatorschicht hoher Integrität und Elastizität. Optional kann die mit den Katalysatorschichten versehene Polymerelektrolyt-Membran bei 70 bis 90 bar und einer Temperatur von 185 °C heiß verpreßt werden. Zur Bildung einer Brennstoffzelle werden auf die Katalysatorschichten Gasverteilerschichten aufgelegt, die aus einem hydrophobierten Kohlenstoffsubstrat und einer Kontaktschicht bestehen.

Alternativ hierzu ist es auch bekannt, die Katalysatorschichten auf die Gasverteilerschichten aufzubringen, wobei diese Gasverteilerschichten vor dem Aufbringen der Katalysatorschicht ebenfalls mit einer Kontaktschicht aus Ruß und PTFE versehen werden, um zu verhindern, daß die Katalysatorpaste zu tief in die porösen Kohlenstoffsubstrate eindringt. Auf diese Art und Weise werden sogenannte Gasverteilerelektroden gebildet, die zum Beispiel von Firma ETEK kommerziell erhältlich sind. Zur Bildung einer Brennstoffzelle werden diese Gasverteilerelektroden von beiden Seiten auf eine Polymerelektrolyt-Membran aufgelegt. Gemäß der US 4,876,115 kann die elektrische Anbindung der Elektroden an die Membran verbessert werden, indem die Katalysatorschichten zum Beispiel mit einer Lösung eines Ionomers imprägniert werden. Die imprägnierten Elektroden werden getrocknet, bevor sie für die Anfertigung von Brennstoffzellen eingesetzt werden.

Auch die EP 0 869 568 A1 beschreibt eine Gasverteilerschicht aus einem Kohlefasergewebe für Membran-Elektrodeneinheiten. Das Kohlefasergewebe wird ebenfalls auf der der jeweiligen Katalysatorschicht zugewandten Seite mit einer Kontaktschicht aus Ruß und einem Fluorpolymer beschichtet, die porös und wasserabstoßend und zugleich elektrisch leitend ist und außerdem eine einigermaßen glatte Oberfläche besitzt. Bevorzugt dringt diese Kontaktschicht nicht mehr als bis zur Hälfte in das Kohlefasergewebe ein. Das Kohlefasergewebe kann zur Verbesserung seiner wasserabstoßenden Eigenschaften mit einer Mischung aus Ruß und einem Fluorpolymer vorbehandelt werden.

In der US 5,620,807 wird eine Gasverteilerschicht (hier "intermediate layer") beschrieben, die durch Infiltrieren und/oder Beschichten einer Seite eines grobporigen Kohlenstoffsubstrates (Kohlepapier, Graphitpapier oder Kohlefilz) mit einer Zusammensetzung aus Ruß und einem Fluorpolymer erhältlich ist, die die Porosität eines oberflächennahen Teils des Kohlenstoffsubstrates vermindert und/oder eine diskrete Schicht verminderter Porosität auf der Oberfläche des Substrates bildet. Die Gasverteilerschicht wird mit dieser Beschichtung auf die Katalysatorschichten von Membran-Elektrodeneinheiten aufgelegt. Dabei ist es wie in der EP 0 869 568 A1 unter anderem Aufgabe der Beschichtung, einen guten elektrischen Kontakt zu den Katalysatorschichten herzustellen.

Die Beschichtung der Kohlenstoffsubstrate entsprechend der US 5,620,807, US 4,293,396, DE 195 44 323 A1 und der EP 0 869 568 mit einer Kontaktschicht aus einer Ruß/PTFE-Mischung ist aufwendig und erfordert eine abschließende Trocknung und Calcination bei 330 bis 400 °C.

Aufgabe der vorliegenden Erfindung ist es, ein vereinfachtes und kostengünstiges Verfahren zur Herstellung von Membran-Elektrodeneinheiten zur Verfügung zu stellen, welches insbesondere für die Verarbeitung von dünnen Polymerelektrolyt-Membranen geeignet ist. Die resultierenden Membran-Elektrodeneinheiten sollen eine kompakte, unlösbare Einheit bilden.

Diese Aufgabe wird gelöst durch ein Verfahren zur Herstellung einer Membran-Elektrodeneinheit, welche eine Polymerelektrolyt-Membran mit zwei gegenüberliegenden Flächen enthält, auf denen jeweils eine Katalysatorschicht und eine Gasverteilerschicht aufgebracht sind. Das Verfahren ist dadurch gekennzeichnet, daß die beiden Gasverteilerschichten der Membran-Elektrodeneinheit durch hydrophobierte Kohlenstoffsubstrate gebildet werden, die unter Verwendung entsprechender Tinten, welche wenigstens einen Katalysator, gelöstes Ionomer und Lösungsmittel enthalten, mit jeweils einer Katalysatorschicht beschichtet und dann mit den noch feuchten Katalysatorschichten auf die gegenüberliegenden Flächen der Polymerelektrolyt-Membran aufgelegt werden und daß danach ein fester Verbund zwischen Elektrolytmembran, Katalysatorschichten und Kohlenstoffsubstraten durch Behandeln der Membran-Elektrodeneinheit bei erhöhter Temperatur unter Druck hergestellt wird.

Das Verfahren zeichnet sich dadurch aus, daß auf eine sonst übliche Kontaktschicht zwischen Katalysatorschicht und dem Kohlenstoffsubstrat verzichtet werden kann, ohne daß darunter die elektrochemische Leistung der Membran-Elektrodeneinheit leidet. Dies wird dadurch erreicht, daß die Katalysatorschichten unter Verwendung einer geeigneten Tinte direkt auf die hydrophobierten Kohlenstoffsubstrate aufgebracht und daß dann die Kohlenstoffsubstrate mit den noch feuchten Katalysatorschichten von beiden Seiten auf die Polymerelektrolyt-Membran aufgelegt werden. Dies erspart einen Arbeitsgang und erleichtert die Bildung eines festen Verbundes zwischen den Komponenten der Membran-Elektrodeneinheit.

Die Kombination aus hydrophobiertem Kohlenstoffsubstrat und Katalysatorschicht wird im folgenden auch als Gasverteilerelektrode bezeichnet.

Nach dem Auflegen der Gasverteilerelektroden mit ihren noch feuchten Katalysatorschichten auf die gegenüberliegenden Seiten der Polymerelektrolyt-Membran wird die so gebildete Sandwich-Struktur unter Druck und erhöhter Temperatur getrocknet. Bevorzugt erfolgt die Trocknung in zwei Stufen. Zunächst wird die Sandwich-Struktur bei einer Temperatur zwischen 70 und 100 °C und einem Druck zwischen 1 und 5 bar getrocknet. Anschließend wird die Temperatur auf einen Wert zwischen 120 und 145 °C und der Druck auf 10 bis 120 bar erhöht. Die Trocknungsdauer beträgt in beiden Stufen zwischen 1 und etwa 10 Minuten. Die Höhe des anzuwendenden Preßdruckes hängt von der Art des Kohlenstoffsubstrates ab. Kohlefaserpapiere sind im allgemeinen druckempfindlicher als Kohlefasergewebe. Wird ein Kohlefaserpapier für die Gasverteilerschicht eingesetzt, so sollten die Preßdrücke in der ersten Stufe 2 bar und in der zweiten Stufe 30 bar nicht übersteigen. Im Falle von Kohlefasergewebe können höhere Preßdrücke angewendet werden.

Das erfindungsgemäße Verfahren ermöglicht somit eine problemlose Verarbeitung druckempfindlicher Kohlefaserpapiere. Die anzuwendenden Drücke bis zu 30 bar liegen wesentlich unter denen die bei der konventionellen Heißverpressung von getrockneten Katalysatorschichten angewendet werden müssen, um einen festen Verbund zwischen Katalysatorschicht und der Polymerelektrolyt-Membran, beziehungsweise der Gasverteilerschicht, herzustellen.

Bei der Herstellung von Membran-Elektrodeneinheiten werden die Ionomermaterialien häufig in einer mit Na⁺- oder K⁺-Ionen ausgetauschten Form eingesetzt, da diese Form thermisch stabiler ist. Abschließend müssen diese ausgetauschten Ionomermaterialien durch Behandeln in heißer Schwefelsäure reprotoniert werden. Dagegen hat sich gezeigt, daß im erfindungsgemäßen Verfahren ein solcher Ionenaustausch nicht notwendig ist. Die Ionomermaterialien können also direkt in ihrer H⁺-Form eingesetzt werden, ohne daß negative Auswirkungen auf die späteren Leistungsdaten beobachtet werden. Eine Reprotonierung der Ionomermaterialien entfällt also beim vorgeschlagenen Verfahren.

Für das Verfahren sind die schon im Stand der Technik genannten Polymerelektrolyt-Membranen geeignet. Werden diese Materialien mit Wasser oder anderen Lösungsmitteln in Kontakt gebracht, so absorbieren sie je nach verwendetem Lösungsmittel bis zu 30 Gew.-% Lösungsmittel und quellen dabei auf. Für das erfindungsgemäße Verfahren können die Membranen sowohl im vorgequollenen als auch im nicht gequollenen Zustand eingesetzt werden. Zur Vorquellung der Membranen werden zweckmäßigerweise die für die Katalysatortinten verwendeten Lösungsmittel eingesetzt.

Als Kathodenkatalysator wird bevorzugt ein Platinkatalysator auf Ruß eingesetzt. Die bevorzugte Beladung des Rußes mit Platin liegt im Bereich zwischen 20 und 75 Gew.-%, bezogen auf das Gesamtgewicht aus Platin und Ruß. Als Anodenkatalysator eignet sich ein Katalysator, der Platin und Ruthenium im Gewichtsverhältnis von 2:1 auf Ruß enthält, wobei die Konzentration der Platingruppenmetalle bezogen auf das Gesamtgewicht des Katalysators ebenfalls im Bereich zwischen 20 und 75 Gew.-% liegt.

Zur Anfertigung der Katalysatortinten werden diese Katalysatoren in einer Lösung eines Ionomers dispergiert. Die Lösung kann wäßrig sein oder auch organische Lösungsmittel enthalten. Zur Einstellung der Hydrophobizität der späteren Katalysatorschicht können der Dispersion noch hydrophobe Polymere wie zum Beispiel PTFE zugesetzt werden. Das bevorzugte Gewichtsverhältnis zwischen Elektrokatalysator und Ionomer in der Katalysatorschicht liegt zwischen 10:1 und 1:1. Weiterhin können die Katalysatortinten noch Porenbildner enthalten. Bevorzugt werden Tinten eingesetzt, die überwiegend Wasser als Lösungsmittel enthalten und somit hydrophil sind. Geeignete Tinten werden zum Beispiel in der deutschen Anmeldeschrift P 100 097 92.8 beschrieben.

Für die Gasverteilerelektroden können sowohl gewebte Kohlefasergewebe als auch Kohlefaservliese und Kohlefaserpapiere mit einer Dicke zwischen 100 und 400 µm eingesetzt werden. Die Porosität dieser Materialien liegt zwischen 50 und über 90 %. Um eine Flutung der Poren mit dem bei der katalytischen Reaktion an der Kathode sich bildenden Wasser zu verhindern, werden diese Kohlenstoffsubstrate mit einer Dispersion eines hydrophoben Polymers imprägniert und anschließend oberhalb der Schmelztemperatur des hydrophoben Polymers gesintert. Wird zum Beispiel PTFE als hydrophobes Polymer eingesetzt, so sind hierfür Temperaturen zwischen 340 und 390 °C notwendig. Die bevorzugte Beladung der Gasverteilerelektroden mit PTFE beträgt dabei zwischen 1 und 30 Gew.-%, bezogen auf das Gesamtgewicht des hydrophobierten Kohlenstoffsubstrates.

Die auf diese Art und Weise hergestellten Membran-Elektrodeneinheiten enthalten eine Polymerelektrolyt-Membran mit zwei gegenüberliegenden Flächen, von denen eine die Anodenseite und die zweite die Kathodenseite der Brennstoffzelle bildet. Auf Anodenund Kathodenseite befindet sich jeweils eine Katalysatorschicht und eine Gasverteilerschicht. Die Membran-Elektrodeneinheiten zeichnen sich dadurch aus, daß ihre Gasverteilerschichten aus einem hydrophobierten Kohlenstoffsubstrat bestehen und mit den Katalysatorschichten der Membran-Elektrodeneinheit in direktem Kontakt stehen. Die erfindungsgemäßen Membran-Elektrodeneinheiten weisen also zwischen dem hydrophobierten Kohlenstoffsubstrat und der Katalysatorschicht keine Kontaktschicht auf.

Die Erfindung wird nun an Hand der folgenden Beispiele und der Figuren 1 - 3 näher erläutert. Es zeigen:
- **Figur 1:**: Aufbau einer Membran-Elektrodeneinheit
- **Figur 2:**: Leistungskurven der gemäß Beispiel 1 und Vergleichsbeispiel 1 hergestellten Membran-Elektrodeneinheiten
- **Figur 3:**: Leistungskurven der gemäß Beispiel 2 und Vergleichsbeispiel 2 hergestellten Membran-Elektrodeneinheiten

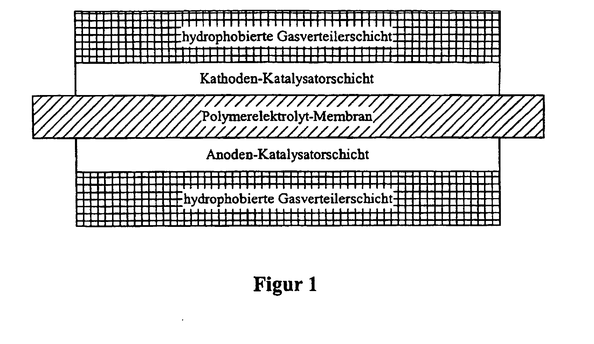

Figur 1 zeigt den typischen Aufbau einer Membran-Elektrodeneinheit aus der Polymerelektrolyt-Membran, den Katalysatorschichten und den hydrophobierten Gasverteilerschichten.

### Beispiel 1:

Mit dem vorgeschlagenen, vereinfachten Verfahren zur Herstellung von Membran-Elektrodeneinheiten lassen sich insbesondere duktile Kohlefaserpapiere verarbeiten, die normalerweise nicht unter hohen Drücken verpreßt werden können, ohne ihre offene, grobporige Struktur zu zerstören. Der Vorteil des betreffenden Verfahrens soll anhand des folgenden Beispiels verdeutlicht werden.

Für die Anfertigung einer Membran-Elektrodeneinheit gemäß dem vorgeschlagenen Verfahren wurden Katalysatortinten mit den folgenden Zusammensetzungen hergestellt:

### Zusammensetzung der Kathodentinte:

| | |
|---|---|
| 14,0 g | Pt-Trägerkatalysator (40 Gew.-% Pt auf Ruß, Fa. Dmc²) |
| 43,0 g | Nafion®-Lösung (10 Gew.-% in Wasser) |
| 10,0 g | Dipropylenglykol |
| 33,0 g | Wasser (vollentsalzt) |
| 100,0 g | |

### Zusammensetzung der Anodentinte:

| | |
|---|---|
| 14,0 g | PtRu-Trägerkatalysator (40 Gew.-% PtRu auf Ruß, 26,4 Gew.-% Pt, 13,6 Gew.-% Ru; Katalysator entsprechend US 6,007,934) |
| 42,0 g | Nafion®-Lösung (10 Gew.-% in Wasser) |
| 10,0 g | Dipropylenglykol |
| 33,0 g | Wasser (vollentsalzt) |
| 100,0 g | |

Als Gasverteilerschicht für die Kathodenseite wurde eine Kohlefaserpapier mit einer Dicke von 250 µm und einer Porosität von 85 % verwendet. Das Kohlefaserpapier wurde mit PTFE hydrophobiert. Die PTFE-Beladung betrug 8 Gew.-%.

Die Kathodentinte wurde direkt auf die Gasverteilerschicht mittels Siebdruck aufgebracht. Die Platin-Beladung dieser so hergestellten Kathode betrug 0,45 mg Pt/cm², ihre aktive Zellenfläche 50 cm².

Als Gasverteilerschicht für die Anodenseite wurde dasselbe Substratmaterial wie für die Kathodenseite verwendet. Die Gasverteilerschicht wurde mit 16 Gew.-% PTFE hydrophobiert und anschließend ebenfalls mittels Siebdruck direkt mit der Anodentinte beschichtet. Die so hergestellte Anode besaß eine Beladung von 0,3 mg Pt/cm² und 0,15 Ru/cm², ihre aktive Fläche betrug 50 cm².

Zur Herstellung der Membran-Elektrodeneinheit wurde eine in Wasser vorgequollene Ionomermembran (Nafion® 112, Fa. DuPont, Dicke der Membran: 50 µm) zwischen Kathode- und Anode mit den noch ungetrockneten Katalysatorschichten eingebracht und zunächst bei einer Temperatur von 80 °C und einem Druck von ca. 1 bar getrocknet. Nach 8 Minuten wurden Temperatur und Druck auf 130 °C und ca. 20 bar erhöht und für 1 Minute konstant gehalten.

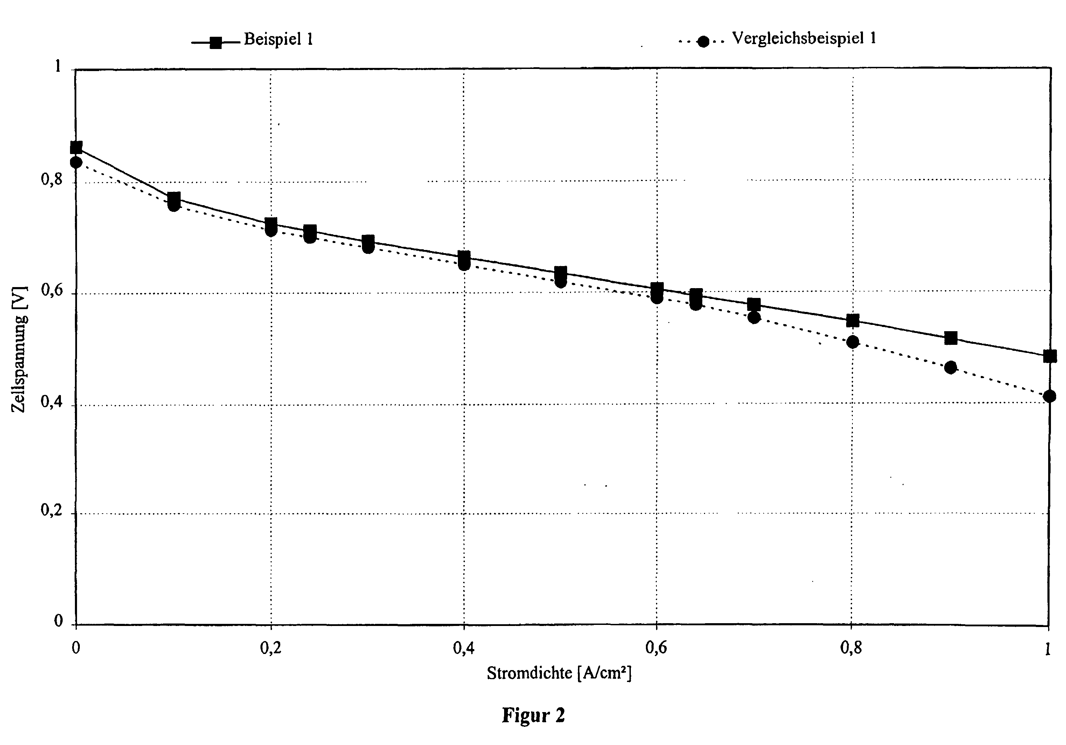

Es wurde ein inniger Verbund zwischen den drei Komponenten (Kathode, Polymermembran und Anode) erhalten, die sich ohne wesentliche Krafteinwirkung nicht mehr voneinander trennen ließen. Die so hergestellte Membran-Elektrodeneinheit wurde in eine Prüfzelle eingebaut und vermessen. Als Anodengas wurde dabei eine Gasmischung von 40 % H₂, 35% N₂, 25 % CO₂, 40 ppm CO mit einem Airbleed von 2 % Luft eingesetzt. Als Kathodengas wurde Luft verwendet. Die Zelltemperatur betrug 70 °C. Die Anodenbefeuchtung wurde bei 85 °C und die Kathodenbefeuchtung bei 55 °C vorgenommen. Der Druck der Arbeitsgase betrug 1 bar (absolut). Die Stöchiometrie der Gase war 1,25 (Anodengas) und 2,5 (Kathodengas). Die gemessenen Zellspannungen in Abhängigkeit von der Stromdichte sind in Figur 2 dargestellt.

### Vergleichsbeispiel 1:

Um den Einfluß der im Beispiel 1 unter Verwendung von ungetrockneten Katalysatorschichten hergestellten Membran-Elektrodeneinheiten zu demonstrieren, wurde für das Vergleichsbeispiel eine weitere Membran-Elektrodeneinheit angefertigt.

Für die Gasverteilerschichten wurde dasselbe Substratmaterial wie für Beispiel 1 verwendet. Die Hydrophobierung wurde analog zu Beispiel 1 mit 16 (Anodenseite) und 8 Gew.-% (Kathodenseite) vorgenommen.

Die verwendeten Katalysatortinten entsprachen den in Beispiel 1 beschriebenen Tinten. Auch die Auftragung der Katalysatortinten direkt auf die Gasverteilerschichten erfolgte analog der Vorgehensweise in Beispiel 1.

Die Edelmetall-Beladungen der so hergestellten Kathode und Anode betrugen 0,49 mg Pt/cm² bzw. 0,34 mg Pt/cm² und 0,17 Ru/cm² auf aktiven Zellenflächen von jeweils 50 cm². Die Katalysatorschichten von Anode und Kathode wurden vor dem Zusammenbau der Membran-Elektrodeneinheit im Ofen bei 80°C für 5 bis 10 min getrocknet.

Zur Fertigstellung der Membran-Elektrodeneinheit wurde eine in Wasser vorgequollene Ionomermembran (Nafion® 112, Fa. DuPont, Dicke der Membran: 50 µm) zwischen die getrocknete Kathode und Anode eingebracht. Anschließend wurden Kathode, Membran und Anode unter exakt den gleichen Bedingungen wie in Beispiel 1 miteinander verpreßt.

Die fertige Membran-Elektrodeneinheit wurde in eine PEM-Brennstoffzelle eingebaut und vermessen. Die dabei verwendeten Betriebsbedingungen entsprachen denen in Beispiel 1. Die gemessenen Zellspannungen in Abhängigkeit von der Stromdichte sind vergleichend mit der Membran-Elektrodeneinheit aus Beispiel 1 in Figur 2 dargestellt.

Das in Beispiel 1 und Vergleichsbeispiel 1 als Gasverteilersubstrat verwendete Kohlefaserpapier ist dem Fachmann als vergleichsweise leicht komprimierbares Material bekannt, dessen poröse Struktur unter höheren Drücken (z.B. > 30 bar) merklich geschädigt werden kann. Viele Verfahren zur Herstellung von Membran-Elektrodeneinheiten versuchen jedoch den Kontakt zwischen Membran und Katalysator durch die Anwendung hoher Drücke zu optimieren. Bei leicht komprimierbaren Materialien können diese Verfahren jedoch nur bedingt eingesetzt werden, da durch die Zerstörung der Porenstruktur der Wasserhaushalt der Membran-Elektrodeneinheit und damit auch ihre Leistungsdaten beeinträchtigt werden. Das hier beschriebene Verfahren bietet jetzt eine Möglichkeit, auch bei Anwendung geringer Anpreßdrücke einen innigen Verbund zwischen den Katalysatorschichten und der Polymermembran zu schaffen und dadurch leistungsstarke Membran-Elektrodeneinheiten herzustellen.

In Figur 2 zeigt sich ein auffallender Leistungsunterschied in den Strom-Spannungskurven, wobei die Membran-Elektrodeneinheit, die durch das im Beispiel 1 beschriebene Verfahren hergestellt wurde, eine um 10-20 mV verbesserte Zellspannung aufweist. Auch die Leistungsfähigkeit im niederen Stromdichtebereich (< 200 mA/cm²) wird dabei positiv beeinflußt. Hierin spiegelt sich ein deutlich verbesserter Kontakt zwischen Membran und Katalysator an den Elektroden wieder, der sich vermutlich aus dem als Haftvermittler fungierenden, in der feuchten Katalysatortinte enthaltenem gequollenen Ionomer ergibt.

Weiterhin auffällig sind die wesentlich besseren Leistungsdaten der erfindungsgemäß hergestellten Membran-Elektrodeneinheit im hohen Stromdichtebereich (>700 mA/cm²). Hier zeigt sich eine um 50 bis 80 mV erhöhte Zellspannung. Dieser Leistungsunterschied deutet auf ein besseres Porensystem und den dadurch resultierenden verbesserten Wasserhaushalt in der Membran-Elektrodeneinheit hin, die nach dem hier beschriebenen Verfahren hergestellt wurde. Offenbar fungiert das unter hohen Temperaturen verdampfende Wasser als Porenbildner, das selbst unter den angelegten Drücken ein zu starkes Komprimieren der Gasverteilerschichten verhindert bzw. ausgleicht.

### Beispiel 2:

Das beschriebene Verfahren läßt sich auch auf vergleichsweise formstabile Kohlenstoffsubstrate anwenden, wie sie zum Beispiel durch Kohlefasergewebe repräsentiert werden. Diese Materialien sind auch unter höheren Drücken nur wenig komprimierbar. Zur Verpressung mit der Ionomermembran lassen sich daher prinzipiell höhere Drücke verwenden, die eine gute Anbindung von Katalysator und Membran gewährleisten. Dieses Beispiel zeigt, daß selbst unter vergleichsweise hohen Drücken das hier angegebene Verfahren unter vergleichbaren Herstellbedingungen zu besseren Leistungsdaten führt.

Die verwendeten Katalysatortinten entsprachen den in Beispiel 1 beschriebenen Tinten. Auch die Auftragung der Katalysatortinten erfolgte analog der Vorgehensweise in Beispiel 1 direkt auf die Gasverteilerschichten, die in diesem Fall aus weitgehend inkompressiblem, hydrophobierten Kohlefasergewebe (Schichtdicke 200 µm; Porosität 90 %) bestanden. Die Hydrophobierungen von Anoden- und Kathodengasverteiler entsprach denen von Beispiel 1.

Die Edelmetall-Beladungen der so hergestellten Kathode und Anode betrugen 0,58 mg Pt/cm² bzw. 0,30 mg Pt/cm² und 0,15 Ru/cm² auf aktiven Zellenflächen von 50 cm².

Die Herstellung der Membran-Elektrodeneinheit erfolgte analog Beispiel 1 durch Einbringen einer in Wasser vorgequollenen Ionomermembran (Nafion® 112, Fa. DuPont, Dicke der Membran: 50 µm) zwischen Kathode und Anode mit den noch ungetrockneten Katalysatorschichten. Zunächst wurde bei einer Temperatur von 100 °C und einem Druck von 2 bar getrocknet. Nach 6 Minuten wurden Temperatur und Druck auf 130 °C und 100 bar erhöht und für 2 Minuten konstant gehalten.

Auch hier wurde, analog Beispiel 1, ein inniger Verbund zwischen den drei Komponenten (Kathode, Polymermembran und Anode) erhalten, der sich ohne wesentliche Krafteinwirkung nicht mehr auftrennen ließ.

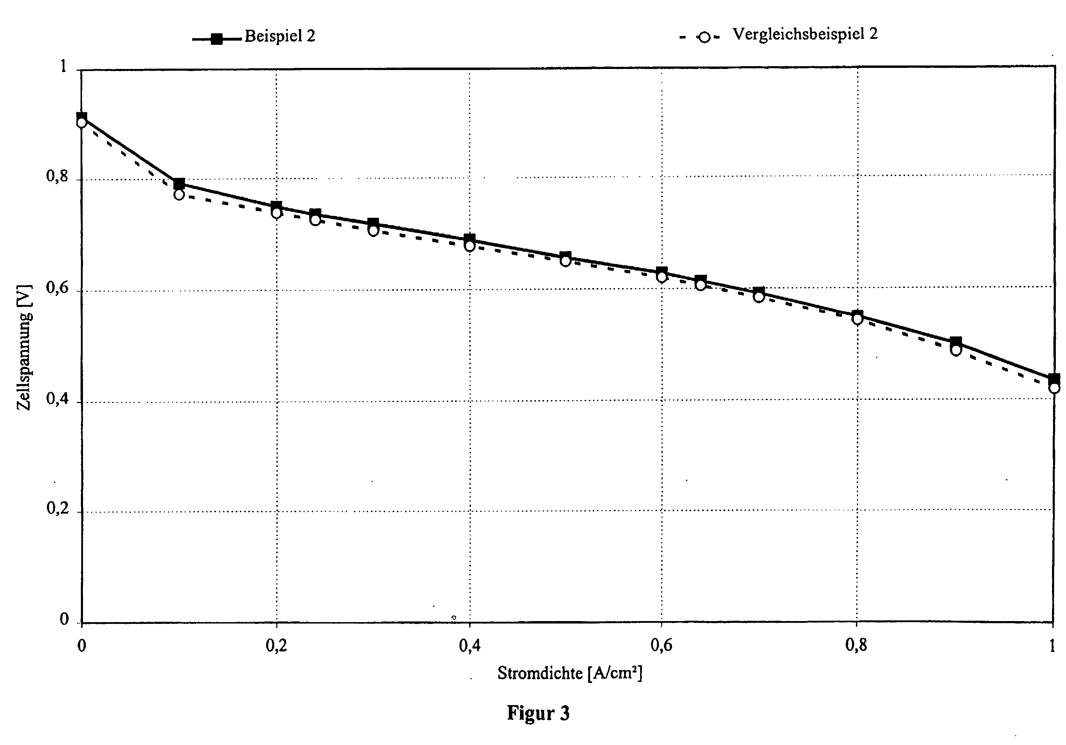

Die so hergestellte Membran-Elektrodeneinheit wurde in eine Prüfzelle eingebaut und vermessen. Die dabei verwendeten Betriebsbedingungen entsprachen denen in Beispiel 1. Die gemessenen Zellspannungen in Abhängigkeit von der Stromdichte im Reformat/Luft-Betrieb sind in Figur 3 dargestellt.

### Vergleichsbeispiel 2

Zum Vergleich mit Beispiel 2 wurde eine weitere Membran-Elektrodeneinheit angefertigt, deren Katalysatorschichten vor dem Zusammenbau getrocknet wurden.

Für die Gasverteilerschichten wurde dasselbe Substratmaterial wie für Beispiel 2 verwendet. Die Hydrophobierung wurde analog zu Beispiel 2 mit 16 (Anodenseite) und 8 Gew.-% (Kathodenseite) vorgenommen.

Die verwendeten Katalysatortinten entsprachen den in Beispiel 1 beschriebenen Tinten. Die Auftragung der Katalysatortinten direkt auf die Gasverteilerschicht erfolgte analog der Vorgehensweise in Beispiel 2.

Die Edelmetall-Beladungen der so hergestellten Kathode und Anode betrugen 0,59 mg Pt/cm² bzw. 0,32 mg Pt/cm² und 0,16 Ru/cm² auf jeweils aktiven Zellenflächen von 50 cm². Die aufgedruckten Katalysatorschichten wurden im Ofen bei 80 °C für 5 bis 10 min getrocknet.

Die Herstellung der Membran-Elektrodeneinheit erfolgte durch Einbringen einer in Wasser vorgequollenen Ionomermembran (Nafion® 112, Fa. DuPont, Dicke der Membran: 50 µm) zwischen die getrocknete Kathode und Anode und anschließendem Verpressen unter exakt den gleichen Bedingungen wie in Beispiel 2 beschrieben.

Die so hergestellte Membran-Elektrodeneinheit wurde in eine PEM-Brennstoffzelle eingebaut und vermessen. Die dabei verwendeten Betriebsbedingungen entsprachen denen in Beispiel 2. Die gemessenen Zellspannungen in Abhängigkeit von der Stromdichte sind vergleichend mit der Membran-Elektrodeneinheit aus Beispiel 2 in Figur 3 dargestellt.

Es zeigt sich ein Leistungsunterschied in den Strom-Spannungskurven von 10 bis 15 mV, insbesondere im niederen Stromdichtebereich (< 200 mA/cm²). Auch hier ist die Membran-Elektrodeneinheit nach Beispiel 2 im Vorteil. Im Vergleich zu Figur 2 sind die Leistungsdaten von beiden Membran-Elektrodeneinheiten bei höheren Stromdichten allerdings im wesentlichen gleich. Hierin zeigt sich, daß der höhere Anpreßdruck bereits zu einer guten Anbindung zwischen Elektrode und Membran führt.

## Patentansprüche

1. Verfahren zur Herstellung einer Membran-Elektrodeneinheit enthaltend eine Polymerelektrolyt-Membran mit zwei gegenüberliegenden Flächen, auf denen jeweils eine Katalysatorschicht und eine Gasverteilerschicht aufgebracht sind, wobei
die beiden Gasverteilerschichten der Membran-Elektrodeneinheit durch hydrophobierte Kohlenstoffsubstrate gebildet werden, die unter Verwendung entsprechender Tinten, welche wenigstens einen Katalysator, gelöstes Ionomer und Lösungsmittel enthalten, mit jeweils einer Katalysatorschicht beschichtet und dann mit den noch feuchten Katalysatorschichten auf die gegenüberliegenden Flächen der Polymerelektrolyt-Membran aufgelegt werden und daß danach ein fester Verbund zwischen Polymerelektrolyt-Membran, Katalysatorschichten und Kohlenstoffsubstraten hergestellt wird, in dem die Membran-Elektrodeneinheit bei erhöhter Temperatur unter Druck behandelt wird.

2. Verfahren nach Anspruch 1, wobei
hydrophile Tinten zur Herstellung der Katalysatorschichten eingesetzt werden.

3. Verfahren nach Anspruch 2, wobei
die Tinten als hauptsächliches Lösungsmittel Wasser enthalten.

4. Verfahren nach Anspruch 1, wobei
die Polymerelektrolyt-Membran vor der Bildung der Membran-Elektrodeneinheit in dem für die Katalysatorschichten verwendeten Lösungsmittel vorgequollen wird.

5. Verfahren nach Anspruch 1, wobei
die Beladung der Kohlenstoffsubstrate mit PTFE zwischen 1 und 30 Gew.-% beträgt, bezogen auf das Gesamtgewicht der hydrophobierten Kohlenstoffsubstrate.

6. Verfahren nach Anspruch 1, wobei
die Herstellung des festen Verbundes zwischen der Polymerelektrolyt-Membran und den beidseitig aufgelegten Katalysatorschichten und Kohlenstoffsubstraten in zwei Stufen vorgenommen wird, wobei die Membran-Elektrodereinheit in der ersten Stufe bei einer Temperatur zwischen 70 und 100 °C und einem Druck zwischen 1 und 5 bar und in der zweiten Stufe bei einer Temperatur zwischen 120.und 145 °C und einem Druck zwischen 10 und 120 bar für jeweils etwa 1 bis 10 Minuten behandelt wird.

## Claims

1. A method of preparing a membrane electrode assembly, containing a polymer electrolyte membrane with two opposite surfaces, each having a catalyst layer and a gas diffusion layer applied thereon, wherein both gas diffusion layers of the membrane electrode assembly are formed of hydrophobized carbon substrates, which are coated with a catalyst layer using corresponding inks containing at least one catalyst, dissolved ionomer and solvent and which are subsequently applied with the catalyst layer still being wet to the opposite surfaces of the polymer electrolyte membrane, and wherein subsequently a firm bond between the polymer electrolyte membrane, the catalyst layers and the carbon substrates is formed by treating the membrane electrode assembly at an elevated temperature under pressure.

2. The method according to claim 1, wherein hydrophilic inks are employed to prepare the catalyst layers.

3. The method according to claim 2, wherein the inks contain water as the main solvent.

4. The method according to claim 1, wherein prior to the preparation of the membrane electrode assembly the polymer electrolyte membrane is pre-swollen in the solvent employed for the catalyst layers.

5. The method according to claim 1, wherein the loading of the carbon substrates with PTFE is between 1 and 30 wt.% based on the total weight of the hydropobized carbon substrates.

6. The method according to claim 1, wherein the formation of the firm bond between the polymer electrolyte membrane and the catalyst layers and the carbon substrates applied on both sides is carried out in two stages, wherein the membrane electrode assembly is treated in the first stage at a temperature between 70 and 100°C and at a pressure between 1 and 5 bar for about 1 to 10 minutes, and in the second stage at a temperature between 120 and 145°C and at a pressure between 10 and 120 bar for about 1 to 10 minutes.

## Revendications

1. Procédé de fabrication d'une unité membrane-électrode comprenant une membrane en électrolyte polymère avec deux faces opposées sur chacune desquelles sont déposées une couche de catalyseur et une couche de répartition de gaz,
dans lequel
les deux couches de répartition de gaz de l'unité sont constituées par des substrats en carbone rendus hydrophobes et qui, par l'utilisation d'encres correspondantes contenant au moins un catalyseur, un ionomère dissous et des solvants, sont garnis chacun d'une couche de catalyseur puis déposés, ces couches étant encore humides, sur les faces opposées de la membrane en électrolyte polymère, une liaison solide étant ensuite établie entre la membrane en électrolyte polymère, les couches de catalyseur et les substrats en carbone par traitement à température élevée et sous pression de l'unité membrane-électrode.

2. Procédé selon la revendication 1,
dans lequel
des encres hydrophiles sont utilisées pour fabriquer les couches de catalyseur.

3. Procédé selon la revendication 2,
dans lequel
les encres contiennent de l'eau en tant que solvant principal.

4. Procédé selon la revendication 1,
dans lequel
la membrane en électrolyte polymère, avant la formation de l'unité menbrane-électrode, est trempée préalablement dans le solvant utilisé pour les couches de catalyseur.

5. Procédé selon la revendication 1,
dans lequel
la charge en PTFE des substrats en carbone est comprise entre 1 et 30 % du poids total des substrats rendus hydrophobes.

6. Procédé selon la revendication 1,
dans lequel
la fabrication de la liaison solide entre la membrane en électrolyte polymère et les deux couches de catalyseur et les substrats en carbone déposés de part et d'autre est effectuée en deux étapes, l'unité membrane-électrode étant réalisée dans la première étape à une température comprise entre 70 et 100°C et une pression comprise entre 1 et 5 bar, et dans la seconde étape à une température comprise entre 120 et 145° C et une pression comprise entre 10 et 120 bar, chaque étape durant de 1 à 10 minutes environ.
